# EUROPÄISCHE PATENTANMELDUNG

(11) **EP 1 293 898 A1**
(43) Veröffentlichungstag der Anmeldung: **19.03.2003**
(21) Anmeldenummer: 01124151.0
(22) Anmeldetag: 10.10.2001
(51) Int. Cl.: G06F 9/46

(54) **Betriebsverfahren für ein Automatisierungsgerät**

(30) Priorität: 14.09.2001 EP 01122134
(71) Anmelder: SIEMENS AKTIENGESELLSCHAFT, 80333 München (DE)
(72) Erfinder: Feld, Joachim, 90451 Nürnberg (DE); Steindl, Günter, 92284 Poppenricht (DE)

(57) **Zusammenfassung**

Es ist Vorgesehen, dass an einen potenziellen Kommunikationspartner (2, 3) eine Anfrage (10) gerichtet werden kann, die diesen veranlasst, dem Anfragenden (1) seine Schnittstelle (11) in maschinenlesbarer Form mitzuteilen. Liegen damit die Schnittstellendaten (5) des potenziellen Kommunikationspartners (2, 3) vor, können diese Daten in ein Programm übernommen und eine Kommunikation mit dem entfernten Partner (2, 3) aufgenommen werden, wobei die Kommunikation einen Aufruf (12) einer von dem entfernten Partner (2, 3) angebotenen Funktionalität (4) umfasst.

## Beschreibung

Die Erfindung betrifft ein Betriebsverfahren für ein Automatisierungsgerät, das mit mindestens einem weiteren Automatisierungsgerät kommunikativ verknüpft ist. Durch die untereinander bestehende kommunikative Verknüpfung sind die beiden Automatisierungsgeräte sowie auf diesen ablaufende Software-Applikationen (Programme) Kommunikationspartner in einer Kommunikationsbeziehung.

Damit zwei Kommunikationspartner, im Folgenden kurz als Partner bezeichnet, über eine wie auch immer geartete Kommunikationsverbindung miteinander kommunizieren können, müssen sie neben dem jeweiligen Kommunikationsprotokoll auch die jeweiligen Schnittstellen kennen, sprich "wissen", über welche Schnittstelle der Partner Daten empfängt oder Daten abgibt und in welchem Format diese Daten vorliegen.

Zur Unterscheidung der beteiligten Kommunikationspartner wird ein Kommunikationspartner, der eine Funktionalität anbietet, im Folgenden als Server und ein Kommunikationspartner, der eine Funktionalität nachfragt, als Client bezeichnet.

Ein einfaches Beispiel für die allgemeine Problemstellung ist z.B. ein Server, der eine Rechenapplikation mit der Funktionalität "Addieren" unter der Funktion "add" (uint 32, uint 32, return uint 32) anbietet. Bei einem Client, bei dem diese Schnittstelle bekannt ist, kann der entsprechende Funktionsaufruf in ein Programm übernommen werden und die Funktion aufgerufen werden. Dies ist dagegen nicht möglich, wenn nicht klar ist, welche Funktionalität der entfernte Partner, der Server, bietet und wie die Funktionalität abgerufen werden kann.

Im Stand der Technik ist zur Lösung dieses Problems bisher vorgesehen, dass die jeweiligen Applikationen, die je nach Kommunikationsbeziehung in einem ersten Fall z.B. Server und in einem zweiten Fall Client sind, wechselseitig die jeweiligen Funktionalitäten und die zugehörigen Schnittstellen "kennen", indem z.B. von einer gemeinsamen globalen Variablen und Schnittstellendeklaration ausgegangen wird, wie sie durch heute gängige so genannte höhere Programmiersprachen z.B. im Wege der Verwendung gemeinsamer Variablendeklarations- oder Schnittstellendeklarationsmodule - bei der Programmiersprache "C" den sog. Header-Dateien - unterstützt wird.

Dies erfordert in nachteiliger Weise, dass für jede Applikation bei deren Erstellung der Zugriff auf Daten dieser Art möglich ist, was insbesondere bei verteilter Entwicklung der einzelnen Applikation nicht oder nur schwer gewährleistet werden kann. Daneben ist auch kaum eine spätere Anpassung der Funktionalität einer ersten Applikation möglich, da stets davon ausgegangen werden muss, dass eine solche Änderung zu Inkonsistenzen hinsichtlich anderer Applikationen, die diese Funktionalität unter Verwendung der ursprünglichen Schnittstelle aufrufen, führt.

Aufgabe der Erfindung ist daher, ein Kommunikationsverfahren anzugeben, bei dem die aufgezeigten Nachteile vermieden werden.

Diese Aufgabe wird mit einem Betriebsverfahren für ein Automatisierungsgerät gemäß Anspruch 1 gelöst. Dabei ist das Automatisierungsgerät mit mindestens einem weiteren Automatisierungsgerät kommunikativ verknüpft. Das Automatisierungsgerät bzw. eine darauf ablaufende Applikation (Programm) wird als Client und das mindestens eine weitere Automatisierungsgerät bzw. eine darauf ablaufende Applikation wird als Server bezeichnet. Ferner ist auf dem Server eine Funktionalität bereitgestellt, die durch den Client genutzt werden soll, wobei Informationen über die Funktionalität auf dem Server gespeichert sind. Dann umfasst das Betriebsverfahren die folgenden Schritte:
a) der Client richtet eine Anfrage an den Server, auf dem die Informationen gespeichert sind, woraufhin dieser als Antwort auf die Anfrage die Informationen übermittelt,
b) der Client übermittelt nach Auswertung der Informationen an den Server, der die Funktionalität bereitstellt, einen Aufruf,
c) auf dem Server wird aufgrund des Aufrufs die Funktionalität ausgeführt und
d) ein eventuelles bei der Ausführung der Funktionalität erhaltenes Ergebnis wird vom Server an den Client übermittelt.

Vorteilhafte Ausgestaltungen der Erfindung sind Gegenstand der abhängigen Ansprüche.

Wenn der Server, der die Funktionalität bereitstellt, durch den Client anhand der im Schritt a) erhaltenen Informationen ermittelt wird, ist es nicht erforderlich, dass der Client bereits vor Aufruf der Funktionalität "wissen" muss, bei welchen anderen Kommunikationsteilnehmern die Funktionalität vorgehalten wird. Der Client richtet statt dessen eine Anfrage an einen zentralen Server, der insbesondere als solcher projektiert ist, und erhält von diesem nicht nur die Information, welche Funktionalität von den anderen erreichbaren Kommunikationsteilnehmern angeboten wird, sondern auch Informationen dahingehend, welcher Kommunikationsteilnehmer welche Funktionalität anbietet.

Wenn die Informationen, die der Server an den Client übermittelt, einen Bezeichner und eine Schnittstelle der Funktionalität umfasst und der Aufruf der Funktionalität mittels des Bezeichners und der Schnittstelle erfolgt, ist eine besonders transparente Verwendung auch entfernter Funktionalität in der gebräuchlichen Syntax so genannter höherer Programmiersprachen möglich.

Wenn die Schnittstelle Ein- und Ausgabeparameter umfasst und das Ergebnis dem oder den Ausgabeparametern entspricht, können Ergebnisse, die mit oder durch eine entfernte Funktionalität ermittelt wurden, ohne zusätzliche Umwandlungsvorgänge in den Datenbestand der Applikation, die als Client die Funktionalität aufgerufen hat, übernommen werden.

Nachfolgend wird ein Ausführungsbeispiel der Erfindung anhand der Figuren näher erläutert. Darin zeigen
- FIG 1: miteinander kommunizierende Kommunikationspartner,
- FIG 2: eine von einem Kommunikationspartner angebotene Funktionalität mit der zugehörigen Schnittstelle,
- FIG 3: eine Informationsdatei,
- FIG 4, FIG 5: und
- FIG 6: Kommunikationsbeziehungen oder -vorgänge.

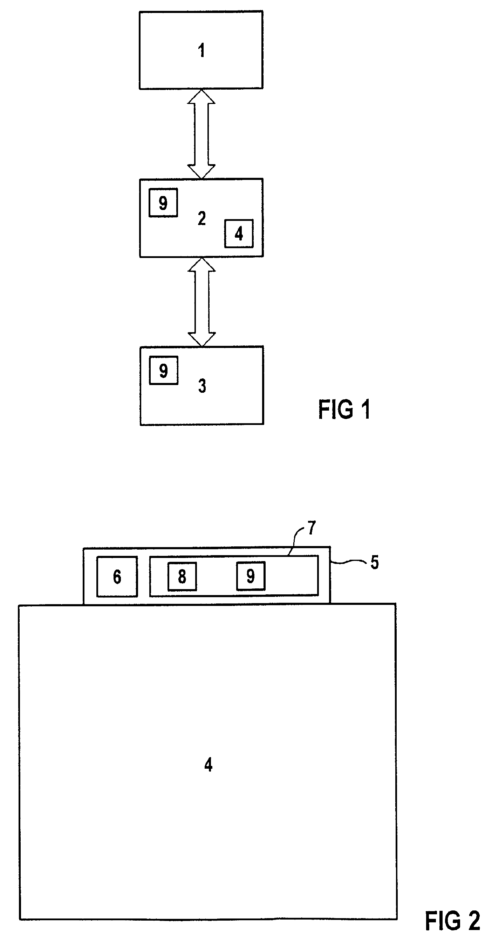

FIG 1 zeigt als miteinander kommunizierende Kommunikationspartner 1, 2, 3 ein erstes, zweites und drittes Automatisierungsgerät 1, 2 und 3. Das erste Automatisierungsgerät 1 wird im Folgenden als Client 1, das zweite Automatisierungsgerät 2 als Server 2 und das dritte Automatisierungsgerät 3 als zentraler Server 3 bezeichnet. Client 1, Server 2 und zentraler Server 3 sind untereinander direkt oder indirekt kommunikativ verbunden, wie durch die Doppelpfeile angedeutet ist.

Die weitere Beschreibung wird fortgesetzt für den exemplarischen Fall, dass der Server 2 zumindest eine Funktionalität 4 bereitstellt, die durch den Client 1 genutzt werden soll. Eine derartige Funktionalität 4 ist z. B. eine Funktionalität, die auf dem Client 1 aufgrund des erforderlichen Speicherplatzes nicht vorgehalten werden kann oder aufgrund der benötigten Rechenleistung nicht oder nicht in angemessener Zeit ausführbar ist.

Ein Beispiel für eine solche Funktionalität 4 ist ein Zugriff auf eine umfangreiche Datenbank (nicht dargestellt) oder die Ausführung einer aufwändigen Berechnung, wie z. B. ein Optimierungsverfahren, insbesondere ein iteratives Optimierungsverfahren. Jede denkbare Funktionalität wird im Folgenden mit dem allgemeinen Begriff Funktionalität 4 bezeichnet.

Damit die auf dem Server 2 befindliche Funktionalität 4 durch den Client 1 aufrufbar ist, sind gewisse Informationen über die Funktionalität 4 erforderlich.

Dazu zeigt FIG 2 die von dem Server 2 angebotene Funktionalität 4 mit zugehörigen Informationen 5. Die Information 5 umfasst einen Bezeichner 6 der Funktionalität 4, um eine erste Funktionalität 4 von einer zweiten Funktionalität 4 eindeutig unterscheiden zu können. Des Weiteren gehört dazu eine der Funktionalität 4 zugeordnete Schnittstelle 7, die Ein- und Ausgabeparameter 8, 8' enthält, damit der Funktionalität 4 Daten als Parameter übergeben werden können und damit durch die Funktionalität 4 Ergebnisse als Parameter an den Client 1 zurückgeliefert werden können.

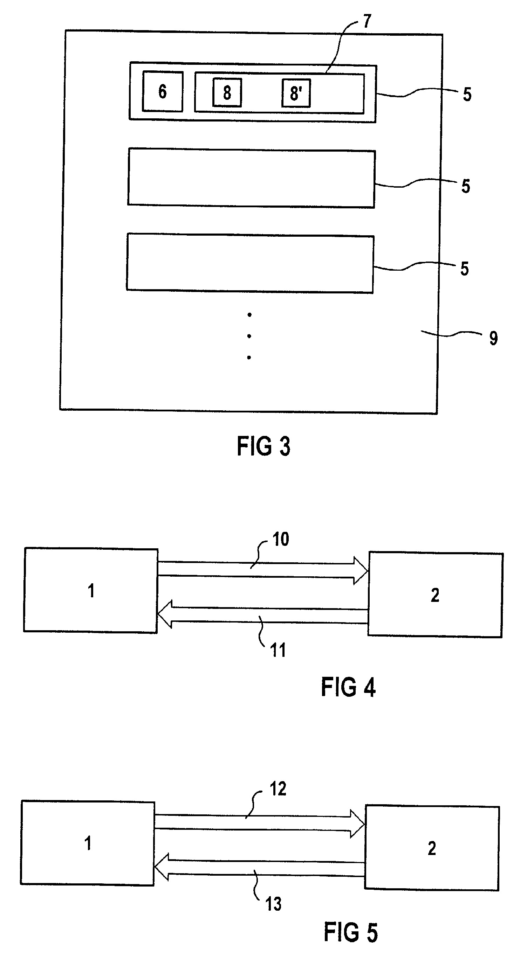

FIG 3 zeigt eine Informationsdatei 9, in der die Informationen 5 zusammengefasst gespeichert sind. Die Informationsdatei 9 befindet sich z. B. auf dem Server 2 oder auch auf dem zentralen Server 3. Es ist auch möglich, dass sowohl auf dem Server 2 als auch auf den zentralen Server 3 jeweils eine Informationsdatei 9 vorgesehen ist, wobei die Informationsdatei 9 auf dem Server z. B. Informationen über häufig benutzte Funktionalitäten 4 beinhaltet und die Informationsdatei 9 auf dem zentralen Server 3 Informationen über weniger häufig benutzte Funktionalitäten 4 beinhaltet.

Figuren 4 und 5 zeigen den Ablauf des Verfahrens bei der Benutzung einer Funktionalität 4, die auf dem Server 2 bereitgehalten wird durch den Client 1.

FIG 4 zeigt eine Anfrage 10, die der Client 1 an den Server 2 richtet. Als Antwort 11 auf die Anfrage 10 übermittelt der Server 2 seine Schnittstelle an den Client 1. Die Schnittstelle korrespondiert mit dem Inhalt der Informationsdatei 9 des Servers 2. Nach dem Erhalt der Schnittstelle "kennt" der Client 1 jede auf dem Server 2 bereitgehaltene Funktionalität 4. Insbesondere ist auf Seiten des Clients 1 damit bekannt, wie eine spezifische Funktionalität 4 genutzt werden kann, d. h. wie diese Funktionalität 4 aufgerufen werden kann, wobei der Aufruf über den jeweiligen Bezeichner 6 erfolgt und wie, d. h. in welcher Reihenfolge und in welchem Format, Parameter 8, 8' an die Funktionalität 4 übergeben werden müssen und in welcher Reihenfolge und in welchem Format Platzhalter zum Aufnehmen eventueller, von der Funktionalität 4 gelieferter Ergebnisse, vorzusehen sind.

In FIG 5 wird jetzt der Ablauf des Verfahrens zur Nutzung einer spezifischen Funktionalität 4 gezeigt. Dabei übermittelt der Client 1 an den Server 2 einen Aufruf 12, in dem die gewünschte Funktionalität durch den entsprechenden Bezeichner 6 ausgewählt ist und der die Schnittstelle 5 umfasst, die für die Nutzung der Funktionalität 4 erforderlich ist. Auf Seiten des Servers 2 wird nun mit den Daten 6, 7, 8, 8' des Aufrufs 12 die angeforderte Funktionalität 4 ausgeführt und ein eventuelles Ergebnis 13 an den aufrufenden Client 1 zurückgegeben.

Der in FIG 4 und 5 gezeigte Ablauf des Verfahrens ist auch kaskadierbar. So ist es z.B. möglich, dass ein Client an den Server 2 eine Anfrage richtet, die vom Server 2 zunächst nicht behandelt werden kann. Dann agiert der Server 2 selbst als Client 1 und leitet die Anfrage 10 an einen weiteren Server weiter solange, bis ein Server gefunden ist, der auf die Anfrage reagiert und eine Antwort 11 zurückgibt. Diese Antwort 11 wird entlang der sich ergebenden Kaskade an den ursprünglichen Client 1 zurückgeliefert. Die Antwort 11 beinhaltet entweder direkt den Server 2, der die Funktionalität 4 ausführen kann, so dass der Aufruf 12 direkt an diesen Server 2 gerichtet werden kann, oder die Anfrage 12 wird selbst durch die Kaskade hindurch geleitet, so dass schließlich der Server 2 erreicht wird, der die Funktionalität ausführen kann. In beiden Fällen liefert der Server 2 schließlich das Ergebnis 13 entweder direkt oder über die Kaskade an den aufrufenden Client zurück.

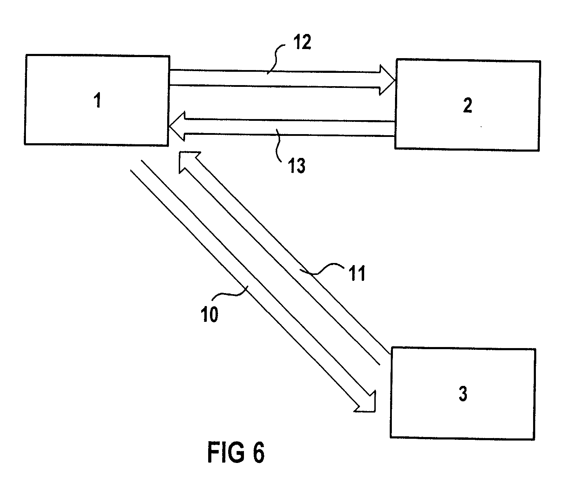

Das Vorhalten der Informationsdatei 9 auf dem Server 2 erfordert Speicherplatz, der auf dem Server 2 nicht immer oder nicht in ausreichendem Maße zur Verfügung steht. Dann kann es vorgesehen sein, dass die Informationsdatei 9 sich nicht oder nicht vollständig auf dem Server 2, sondern auf einem zentralen Server 3 befindet. FIG 6 zeigt den Ablauf des Verfahrens für eine solche Konstellation.

Gemäß FIG 6 übermittelt der Client 1 dabei zunächst eine Anfrage 10 an den zentralen Server 3. Dieser übermittelt die Schnittstelle 11 (den Inhalt der bei ihm gespeicherten Informationsdatei 9) zurück an den aufrufenden Client 1. Die Schnittstelle 11 umfasst dabei jetzt neben den oben bereits beschriebenen Informationen zusätzlich auch die Information, auf welchem Automatisierungsgerät 2, 3 die gewünschte Funktionalität 4 nun tatsächlich vorgehalten wird. Auf Seiten des Clients 1 wird aus der übermittelten Schnittstelle 11 die gewünschte Funktionalität ausgewählt und diese mittels eines Aufrufs 12 bei dem Automatisierungsgerät 2, 3 auf den die Funktionalität 4 vorgehalten wird, aufgerufen. Das entsprechende Automatisierungsgerät 2, 3 mit der aufgerufenen Funktionalität liefert ein eventuelles Ergebnis 13 an den aufrufenden Client 1 zurück.

Auch der in FIG 6 gezeigte Ablauf des Verfahrens lässt sich mit dem in den Figuren 4 und 5 gezeigten Ablauf des Verfahrens kaskadieren, so dass, wenn der Client 1 eine Anfrage 10 an den zentralen Server 3 richtet, dieser nun in der Funktion als Client (vgl. FIG 4) die Anfrage 10 an den Server 2, der die nachgefragte Funktionalität 4 ausführen kann, weiterleitet, von diesem als Antwort 11 auf die Anfrage 10 seine Schnittstelle übermittelt, die der zentrale Server 3 schließlich an den aufrufenden Client 1 zurück übermittelt. Dann erfolgt auch der Aufruf 12 der Funktionalität mittels eines zunächst an den zentralen Server 3 gerichteten Aufrufs 12, der von diesem in seiner Eigenschaft als Client (vgl. FIG 5) an den Server 2 weitergeleitet wird. Dieser liefert das Ergebnis 13 zunächst an den zentralen Server 3 zurück, von wo aus es schließlich an den ursprünglich aufrufenden Client 1 gelangt.

Zusammenfassend lässt sich die Erfindung kurz wie folgt darstellen:

Es ist vorgesehen, dass an einen potenziellen Kommunikationspartner 2, 3 eine Anfrage 10 gerichtet werden kann, die diesen veranlasst, dem Anfragenden 1 seine Schnittstelle 11 in maschinenlesbarer Form, z.B. im so genannten XML-Format, direkt oder indirekt mitzuteilen. Eine indirekte Mitteilung bedeutet, dass dem anfragenden Partner 1 mitgeteilt wird, bei welchem weiteren Partner im Netzwerk er die Schnittstelle direkt erfragen kann. Liegen damit die Schnittstellendaten 5 des potenziellen Kommunikationspartners 2, 3 vor, können diese Daten in ein Programm übernommen und die Kommunikation mit dem entfernten Partner 2, 3 aufgenommen werden, wobei die Kommunikation einen Aufruf 12 einer von dem entfernten Partner 2, 3 angebotenen Funktionalität 4 umfasst.

## Patentansprüche

1. Betriebsverfahren für ein Automatisierungsgerät (1), im Folgenden Client (1), das mit mindestens einem weiteren Automatisierungsgerät (2, 3), im Folgenden Server (2, 3) kommunikativ verknüpft ist, wobei auf dem Server (2, 3) eine Funktionalität (4) bereitgestellt ist, die durch den Client (1) genutzt werden soll, wobei Informationen (5) über die Funktionalität (4) auf dem Server (2, 3) gespeichert sind, mit folgenden Schritten:
a) der Client (1) richtet eine Anfrage (10) an den Server (2, 3), auf dem die Informationen (5) gespeichert sind, woraufhin dieser als Antwort (11) auf die Anfrage (10) die Informationen (5) übermittelt,
b) der Client (1) übermittelt nach Auswertung der Informationen (5) an den Server (2, 3), der die Funktionalität (4) bereitstellt, einen Aufruf (12),
c) auf dem Server (2) wird aufgrund des Aufrufs (12) die Funktionalität (4) ausgeführt und
d) ein eventuelles bei der Ausführung der Funktionalität (4) erhaltenes Ergebnis (13) wird vom Server (2) an den Client übermittelt.

2. Betriebsverfahren nach Anspruch 1,
wobei der Server (2, 3), der die Funktionalität (4) bereitstellt, durch den Client (1) anhand der im Schritt a) erhaltenen Informationen (5) ermittelt wird.

3. Betriebsverfahren nach Anspruch 1 oder 2,
wobei die Informationen (5) einen Bezeichner (6) und eine Schnittstelle (7) der Funktionalität (4) umfassen und wobei der Aufruf (12) mittels des Bezeichners (6) und der Schnittstelle (7) erfolgt.

4. Betriebsverfahren nach Anspruch 3,
wobei die Schnittstelle (7) Ein- und Ausgabeparameter (8, 8') umfasst und wobei das Ergebnis (13) dem oder den Ausgabeparametern (8') entspricht.
